(19) **Europäisches Patentamt / European Patent Office / Office européen des brevets**

(11) **EP 4 490 000 B1**

(12) **EUROPEAN PATENT SPECIFICATION**

(45) Date of publication and mention
of the grant of the patent:
**08.04.2026 Bulletin 2026/15**

(21) Application number: **22712389.0**

(22) Date of filing: **10.03.2022**

(51) International Patent Classification (IPC):
**B60T 8/17** *(2006.01)* **B60T 8/175** *(2006.01)*
**B60T 8/1761** *(2006.01)*

(52) Cooperative Patent Classification (CPC):
**B60T 8/1708; B60T 8/172;** B60T 2250/04

(86) International application number:
**PCT/EP2022/056181**

(87) International publication number:
**WO 2023/169681 (14.09.2023 Gazette 2023/37)**

(54) **SENSOR SYSTEM FOR DETERMINING VEHICLE SPEED OVER GROUND**

SENSORSYSTEM ZUR BESTIMMUNG DER FAHRZEUGGESCHWINDIGKEIT ÜBER GRUND

SYSTEME DE CAPTEUR POUR DETERMINER LA VITESSE DU VEHICULE SUR LE SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2025 Bulletin 2025/03**

(73) Proprietor: **VOLVO TRUCK CORPORATION
405 08 Göteborg (SE)**

(72) Inventors:
• **RYDSTRÖM, Mats
427 39 Billdal (SE)**

• **ARIKERE, Adithya
412 75 Göteborg (SE)**
• **JONASSON, Mats
433 49 Partille (SE)**
• **GELSO, Esteban
421 51 Göteborg (SE)**

(74) Representative: **Ström & Gulliksson AB
P.O. Box 4188
203 13 Malmö (SE)**

(56) References cited:
**WO-A1-2021/144065 US-B1- 6 194 850**

**Description**

TECHNICAL FIELD

The present invention relates to a system and a method for ensuring safe and efficient vehicle motion management of a heavy-duty vehicle. The methods are particularly suitable for use with cargo transporting vehicles, such as trucks and semi-trailers. The invention can however also be applied in other types of heavy-duty vehicles, e.g., in construction equipment and in mining vehicles, as well as in cars.

BACKGROUND

Heavy-duty vehicles have traditionally been controlled using torque request signals generated based on the position of an accelerator or brake pedal and sent to motion support devices (MSDs) such as service brakes and propulsion devices over a controller area network (CAN) bus. However, advantages may be obtained by instead controlling the actuators using wheel slip or wheel speed requests sent from a central vehicle controller to the different actuators. This moves the actuator control closer to the wheel end, and therefore allows for a reduced latency and a faster more accurate control of the MSDs. Wheel-slip based MSD control approaches are particularly suitable for use with wheel-end electrical machines in a battery or fuel cell powered heavy-duty vehicle, which axle speeds can be accurately controlled at high bandwidth. Wheel-slip based vehicle motion management (VMM) and its associated advantages are discussed, e.g., in WO 2017/215751 and also in WO 2021/144010.

Wheel slip and wheel speed-based control of heavy-duty vehicles rely on accurate knowledge of the vehicle speed over ground as well as the rotation speed of the wheel, since these two quantities together determine the wheel slip. The rotation speed of the wheel can be reliably obtained from sensors such as Hall effect sensors or rotary encoders. However, the vehicle speed over ground may be more difficult to obtain robustly and in a cost efficient manner, at least in some challenging environments and operating conditions, such as low friction operating conditions and during maneuvering involving large wheel forces. A global positioning system (GPS) receiver is often able to determine vehicle speed over ground, but satellite systems are prone to error in environments with strong multipath radio propagation and of course require a clear view of the sky to operate, which is not always available.

US 2004/0138802 discusses use of radar techniques for determining vehicle speed over ground. An advantage of using radar sensors for determining vehicle speed over ground is that they are capable of determining both longitudinal and lateral vehicle speed over ground.

US 2020/0191938 A1 relates to determining the reliability of an estimated vehicle speed over ground.

WO2021/144065 A1 discloses systems and methods for controlling vehicle movement.

US 6194850 B1 discloses methods for reliably measuring vehicle speed using a radar.

However, despite the work done to-date, there is a continuing need for reliable and cost-effective methods of determining vehicle speed over ground suitable for use in heavy-duty vehicles, and in particular for heavy-duty vehicles controlled based on wheel slip.

SUMMARY

It is an object of the present invention to provide a concept for improving methods for determining the speed over ground of a heavy-duty vehicle, and for performing vehicle motion management of heavy-duty vehicles. The object is obtained by a VMM system for a heavy-duty vehicle which comprises at least one radar module configured to determine a speed over ground of the heavy-duty vehicle, a motion estimation function configured to estimate a vehicle motion state based at least in part on the speed over ground, and an MSD coordination function configured to coordinate actuation of a plurality of MSDs of the heavy-duty vehicle in dependence of a vehicle motion request and the vehicle motion state. The radar module is arranged to output a radar performance metric to the MSD coordination function indicative of a current accuracy of the determined speed over ground and the MSD coordination function is arranged to reduce a wheel slip set-point of one or more wheels of the heavy-duty vehicle in case the radar performance metric does not meet a pre-determined acceptance criterion. Thus, in case the radar module does not output reliable data indicative of the speed over ground of the heavy-duty vehicle, the MSD coordination function adjusts its force allocation among the MSDs to place at least one of the wheels in a low slip condition, or even a zero wheel slip. The MSD coordination function is able to select a suitable wheel for placing in low slip condition, given the motion request and vehicle state, which is an advantage since it reduces the impact on the overall motion management of the vehicle. The one or more wheels placed in a low slip condition by the MSD coordination function can then be used to more reliably determine vehicle speed over ground using wheel speed sensors. It is an advantage that the slip limitation is performed by the MSD coordination function since this minimizes the impact on vehicle motion. The MSD coordination function simply re-allocates forces among its available MSDs to compensate for the slip limitation imposed on the one or more wheels of the heavy-duty vehicle. The MSD coordination function is, according to an example of the herein proposed technique, arranged to set a wheel slip request and/or a torque request for one or more wheels of the heavy-duty vehicle to zero or to some small value in case the radar performance metric does not meet the pre-determined acceptance criterion. The consequences of this slip and/or torque limitation imposed on the actuators of one or more wheels is then compensated for by the MSD coordination function, which re-allocates forces among remaining actuators on the heavy-duty vehicle.

The invention is defined in the appended independent claims 1, 12, 14, 15 and 16.

According to some aspects, the MSD coordination function is configured to coordinate actuation of the plurality of MSDs of the heavy-duty vehicle based on the solution to a constrained optimization problem, where one or more constraints of the constrained optimization problem is arranged to be configured in dependence of the radar performance metric in relation to the pre-determined acceptance criterion. Thus, the force allocation among the MSDs is automatically updated in response to the low lip condition requirement placed on one or more wheel in response to the performance issues reported by the radar module. The impact on the overall motion of the heavy-duty vehicle is thus minimized.

According to some other aspects, the MSD coordination function is arranged to output data indicative of a wheel slip set-point and/or a torque set-point of a wheel on the heavy-duty vehicle to the motion estimation function and the motion estimation function is arranged to estimate the vehicle motion state based on the data indicative of wheel slip set-point and/or torque set-point. The motion estimation function may, e.g., select a wheel speed sensor input signal to base motion estimation on from the input received from the MSD coordination function, and/or perform sensor fusion of the input sensor signals based on the data received from the MSD coordination function. This allows for an increased reliability in the overall VMM system since a reliable motion estimation can be ensured despite reduction in the performance of the radar-based vehicle speed over ground determination. In essence the motion estimation function can be arranged to estimate the vehicle motion state based on wheel speed in case the radar performance metric does not meet a pre-determined acceptance criterion, and on the speed over ground from the radar module otherwise.

The VMM system may also base its function of a plurality of radar modules. In this case the MSD coordination function can be arranged to reduce a wheel slip set-point of a wheel of the heavy-duty vehicle located in connection to a radar module reporting a radar performance metric which does not meet the pre-determined acceptance criterion. This way the vehicle speed over ground data which is lost due to the performance issues at a given radar module can be compensated for, at least in part, by the improved accuracy in vehicle speed over ground estimation based on a corresponding wheel speed.

There is also disclosed herein control units, vehicles, computer programs, computer readable media, and computer program products associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The above, as well as additional objects, features and advantages, will be better understood through the following illustrative and non-limiting detailed description of exemplary embodiments, wherein:

Figure 1        illustrates an example heavy-duty vehicle;

Figure 2        is a graph showing example tyre forces as function of wheel slip;

Figure 3        shows an example motion support device control arrangement;

Figures 4A-C    illustrate example range-Doppler maps;

Figure 5        illustrates an example vehicle control function architecture;

Figure 6        illustrates an example heavy-duty vehicle;

Figure 7        illustrates performance monitoring based on Doppler variance;

Figure 8        is a flow chart illustrating methods;

Figure 9        schematically illustrates a control unit; and

Figure 10       shows an example computer program product;

DETAILED DESCRIPTION

The present invention will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

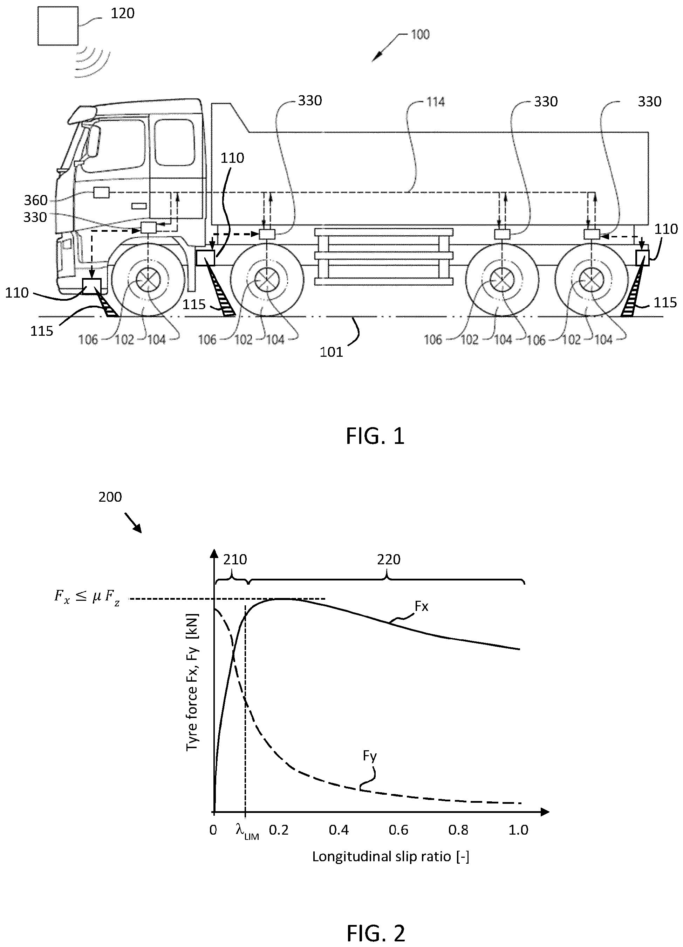

Figure 1 illustrates an example heavy-duty vehicle 100, here in the form of a truck. The vehicle comprises a plurality of wheels 102, wherein at least a subset of the wheels 102 comprises a respective motion support device (MSD) 104. Although the embodiment depicted in Figure 1 illustrates an MSD for each of the wheels 102, it should be readily understood that e.g., one pair of wheels 102 may be arranged without such an MSD 104. Also, an MSD may be arranged connected to more than one wheel, e.g., via a differential drive arrangement.

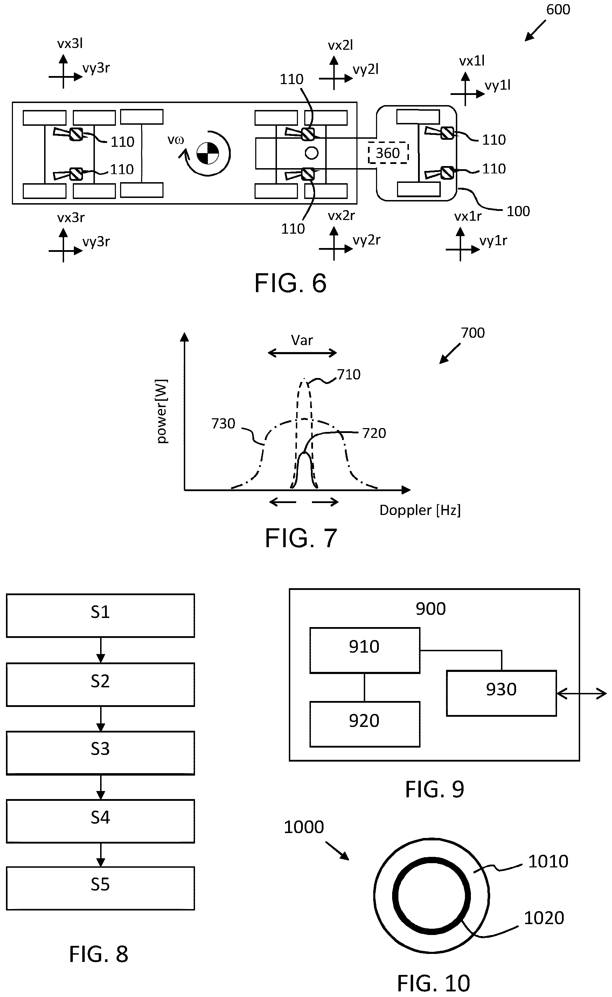

It is appreciated that the herein disclosed methods and control units can be applied with advantage also in other types of heavy-duty vehicles, such as trucks with drawbar connections, construction equipment, buses, and the like. The vehicle 100 may also comprise more than two vehicle units, i.e., a dolly vehicle unit may be used to tow more than one trailer. Some aspects of the herein proposed techniques are particularly suitable for articulated vehicles such as semi-trailers, as will be discussed in more detail below in connection to Figure 6.

The MSDs 104 may be arranged for generating a torque on a respective wheel of the vehicle or for both wheels of an axle. The MSD may be a propulsion device, such as an electric machine 106 arranged to e.g., provide a longitudinal wheel force to the wheel(s) of the vehicle 100. Such an electric machine may thus be adapted to generate a propulsion torque as well as to be arranged in a regenerative braking mode for electrically charging a battery (not shown) or other energy storage system(s) of the vehicle 100. The electric machines may be integrally formed with respective wheel end modules as will be discussed in more detail below.

The MSDs 104 may also comprise friction brakes such as disc brakes or drum brakes arranged to generate a braking torque by the wheel 102 in order to decelerate the vehicle. Herein, the term acceleration is to be construed broadly to encompass both positive acceleration (propulsion) and negative acceleration (braking).

The methods disclosed herein primarily relate to controlling propulsion of heavy-duty vehicles, i.e., acceleration. However, the disclosed methods may also find use in decelerating heavy-duty vehicles, i.e., during braking maneuvers, and also during cornering.

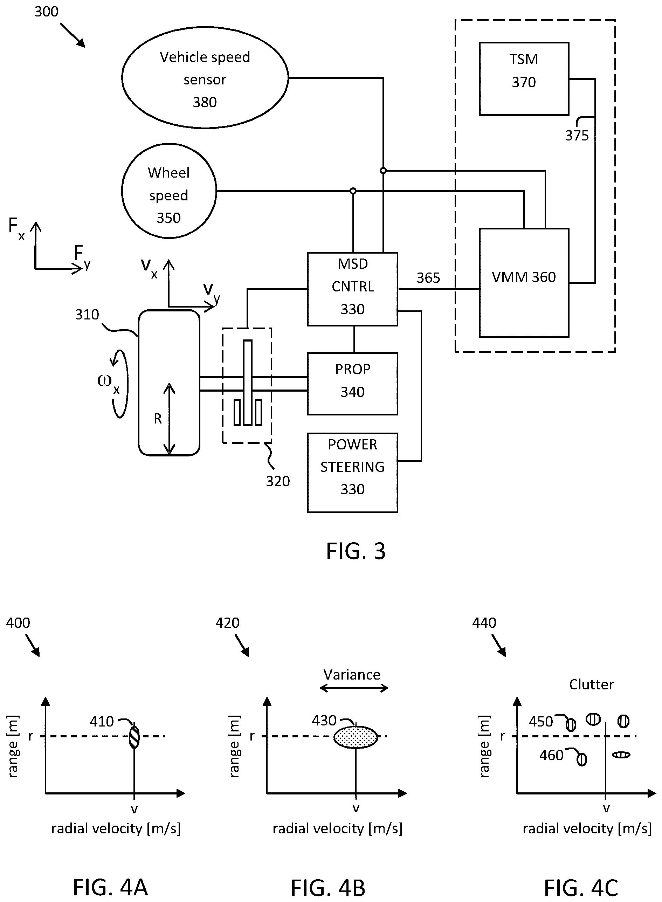

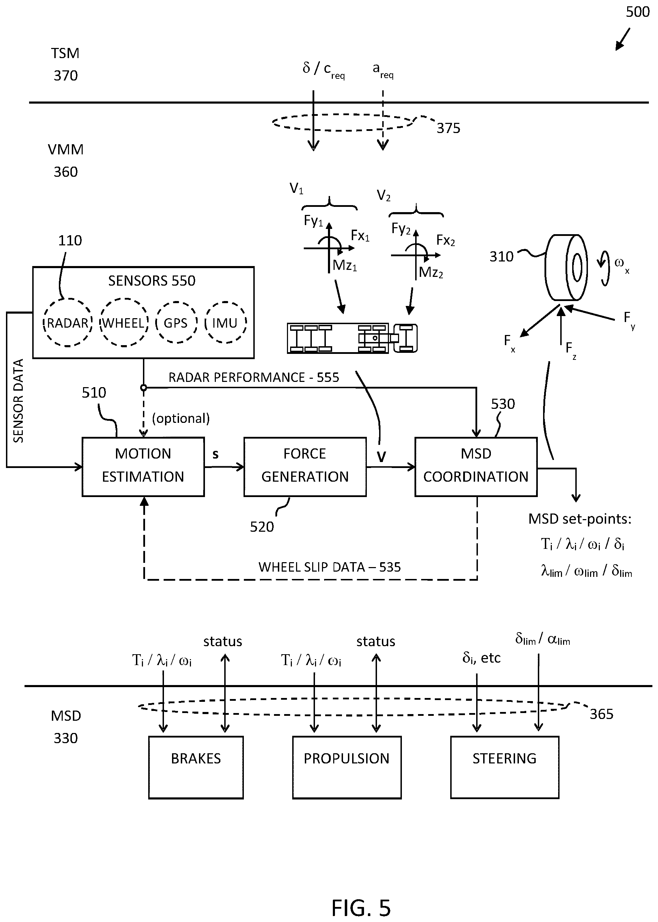

Moreover, each of the MSDs 104 is connected to a respective MSD control system or control unit 330 arranged for controlling operation of the MSD 104. The MSD control system 330 is preferably a decentralized motion support system 330, although centralized implementations are also possible. It is furthermore appreciated that some parts of the MSD control system may be implemented on processing circuitry remote from the vehicle, such as on a remote server 120 accessible from the vehicle via wireless link. Still further, each MSD control system 330 is connected to a VMM system or function 360 of the vehicle 100 via a data bus communication arrangement 114 that can be either wired, wireless or both wired and wireless. Hereby, control signals can be transmitted between the vehicle motion management system 360 and the MSD control system 330. The vehicle motion management system 360 and the MSD control system 330 will be described in further detail below with reference to Figure 3 and Figure 5.

The VMM system 360 as well as the MSD control system 330 may include a microprocessor, microcontroller, programmable digital signal processor or another programmable device. The systems may also, or instead, include an application specific integrated circuit, a programmable gate array or programmable array logic, a programmable logic device, or a digital signal processor. Where the system(s) include(s) a programmable device such as the microprocessor, microcontroller or programmable digital signal processor mentioned above, the processor may further include computer executable code that controls operation of the programmable device. Implementation aspects of the different vehicle unit processing circuits will be discussed in more detail below in connection to Figure 9.

Generally, the MSDs on the vehicle 100 may also be realized as, e.g., a power steering device, active suspension devices, and the like. Although these types of MSDs cannot be used to directly generate longitudinal force to accelerate or brake the vehicle, they are still part of the overall vehicle motion management of the heavy-duty vehicle and may therefore form part of the herein disclosed methods for vehicle motion management. Notably, the MSDs of the heavy-duty vehicle 100 are often coordinated in order to obtain a desired motion by the vehicle. For instance, two or more MSDs may be used jointly to generate a desired propulsion torque or braking torque, a desired yaw motion by the vehicle, or some other dynamic behavior. Coordination of MSDs will be discussed in more detail in connection to Figure 5.

Longitudinal wheel slip $\lambda_x$ may, in accordance with SAE J370 (SAE Vehicle Dynamics Standards Committee January 24, 2008) be defined as

$$\lambda_x = \frac{R\omega_x - v_x}{max(|R\omega_x|, |v_x|)}$$

where R is an effective wheel radius in meters, $\omega_x$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel. The VMM 360 and optionally also the MSD control system 330 maintains information on $v_x$ in the reference frame of the wheel, while a wheel speed sensor or the like can be used to determine $\omega_x$ (the rotational velocity of the wheel).

Slip angle $\alpha$, also known as sideslip angle, is the angle between the direction in which a wheel is pointing and the direction in which it is actually traveling (i.e., the angle between the longitudinal velocity component $v_x$ and the vector sum of wheel forward velocity $v_x$ and lateral velocity $v_y$. This slip angle results in a force, the cornering force, which is in the plane of the contact patch and perpendicular to the intersection of the contact patch and the midplane of the wheel. The cornering force increases approximately linearly for the first few degrees of slip angle, then increases non-linearly to a maximum before beginning to decrease.

The slip angle, $\alpha$ is often defined as

$$\alpha = \arctan\left(\frac{v_y}{|v_x|}\right)$$

where $v_y$ is the lateral speed of the wheel in the coordinate system of the wheel.

Herein, longitudinal speed over ground may be determined relative to the vehicle, in which case the speed direction refers to the forward direction of the vehicle or relative to a wheel, in which case the speed direction refers to the forward direction, or rolling direction, of the wheel. The same is true for lateral speed over ground, which can be either a lateral speed of the vehicle or a lateral speed over ground of a wheel relative to its rolling direction. The meaning will be clear from context, and it is appreciated that a straight forward conversion can be applied in order to translate speed over ground between the coordinate system of the vehicle and the coordinate system of the wheel, and vice versa. Vehicle and wheel coordinate systems are discussed, e.g., by Thomas Gillespie in "Fundamentals of Vehicle Dynamics" Warrendale, PA: Society of Automotive Engineers, 1992.

In order for a wheel (or tyre) to produce a wheel force which affects the motion state of the heavy-duty vehicle, such as an acceleration, slip must occur. For smaller slip values the relationship between slip and generated force is approximately linear, where the proportionality constant is often denoted as the slip stiffness $C_x$ of the tyre. A tyre is subject to a longitudinal force $F_x$, a lateral force $F_y$, and a normal force $F_z$. The normal force $F_z$ is key to determining some important vehicle properties. For instance, the normal force to a large extent determines the achievable longitudinal tyre force $F_x$ by the wheel since, normally, $F_x \leq \mu F_z$, where $\mu$ is a friction coefficient associated with a road friction condition. The maximum available lateral force for a given wheel slip can be described by the so-called Magic Formula as described in "Tyre and vehicle dynamics", Elsevier Ltd. 2012, ISBN 978-0-08-097016-5, by Hans Pacejka, where wheel slip and tyre force is also discussed in detail.

Figure 2 is a graph showing an example 200 of achievable tyre forces as function of longitudinal wheel slip. Fx is the longitudinal tyre force while Fy is the maximum obtainable lateral wheel force for a given wheel slip. This type of relationship between wheel slip and generated tyre force is often referred to as an inverse tyre model, and it is generally known. The examples in Figure 2 are for positive wheel forces, i.e., acceleration. Similar relationships exist between wheel slip and negative wheel force, i.e., braking.

An inverse tyre model can be used to translate between a desired longitudinal tyre force $F_x$ and longitudinal wheel slip $\lambda_x$. The interface between VMM and MSDs capable of delivering torque to the vehicle's wheels has as mentioned above traditionally been focused on torque-based requests to each MSD from the VMM without any consideration towards wheel slip. However, this approach has some performance limitations. In case a safety critical or excessive slip situation arises, then a relevant safety function (traction control, anti-lock brakes, etc.) operated on a separate control unit normally steps in and requests a torque override in order to bring the slip back into control. The problem with this approach is that since the primary control of the actuator and the slip control of the actuator are allocated to different electronic control units (ECUs), the latencies involved in the communication between them significantly limits the slip control performance. Moreover, the related actuator and slip assumptions made in the two ECUs that are used to achieve the actual slip control can be inconsistent and this in turn can lead to sub-optimal performance. Significant benefits can be achieved by instead using a wheel speed or wheel slip-based request on the interface between VMM 360 and the MSD controller or controllers 330, thereby shifting the difficult actuator speed control loop to the MSD controllers, which generally operate with a much shorter sample time compared to that of the VMM system. Such an architecture can provide much better disturbance rejection compared to a torque-based control interface and thus improves the predictability of the forces generated at the tyre road contact patch.

Referring again to Figure 2, the example longitudinal tyre force Fx shows an almost linearly increasing part 210 for small wheel slips, followed by a part 220 with more non-linear behavior for larger wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit $\lambda_{lim}$ on the order of, e.g., 0.1 or so, can be imposed on a given wheel. Thus, having accurate knowledge of current wheel slip, operation in the linear region can be ensured, which greatly simplifies vehicle motion control for both safety, efficiency, and driver comfort.

A problem encountered when using wheel slip to actively control one or more wheels on a heavy-duty vehicle, such as the vehicle 100, and also when executing more low complex control such as imposing the above-mentioned wheel slip limit $\lambda_{lim}$ locally at wheel end, is that the speed over ground $v_x$ of the wheel (and of the vehicle) may not be accurately known. For instance, if wheel speed sensors such as Hall effect sensors or rotational encoders are used to determine vehicle speed over ground, then the vehicle speed over ground will be erroneously determined in case the wheels used for estimating the speed over ground are themselves slipping. Also, vehicle speed over ground determined based on wheel rotation is one-dimensional, i.e., the method does not allow determining a wheel lateral speed over ground $v_y$ in addition to the longitudinal speed over ground $v_x$, i.e., a speed vector in two dimensions. This of course makes estimating the sideslip angle $\alpha$ challenging.

Satellite based positioning systems can be used to determine the speed over ground of a heavy-duty vehicle 100 and of any given wheel on the vehicle 100. However, these systems do not function well in some environments, such as environments without a clear view of the sky. Multipath propagation of the satellite radio signals can also induce large errors in the estimated vehicle position, which then translates into errors in the estimated vehicle speed over ground.

Vision-based sensor systems and radar systems can also be used to determine vehicle speed over ground. However, such systems are relatively costly and not always without issues when it comes to accuracy and reliability. Vision-based sensor may for instance suffer from performance degradation due to sun glare while radar sensor systems may be prone to interference from other radar transceivers.

The present disclosure proposes the use of radar to determine both longitudinal and lateral velocity of a vehicle with respect to ground. With reference to Figure 1, a radar module 110 can be configured to determine a two-dimensional velocity vector $[v_x, v_y]$ of a heavy-duty vehicle 100 with respect to a ground plane or road surface 101 supporting the vehicle 100. This type of radar system comprises a radar transceiver arranged to transmit and to receive a radar signal 115 via an antenna array. The principle of determining speed over ground using a radar system was, as mentioned above, previously discussed in US 2004/0138802.

The radar transceiver is arranged to transmit a radar signal over a radar bandwidth, where a larger bandwidth improves range resolution in a known manner. Velocity resolution depends on the radar wavelength and the repetition period of the waveform in a known manner. According to some aspects, the transceiver is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. Given an most radar signal formats, such as the FMCW format, the distance to the ground plane 101 (and also to reflecting material under the road surface) may be determined based on a first Discrete Fourier Transform (DFT), or Fast Fourier Transform (FFT), and the radial velocity or Doppler frequency of the illuminated portion of ground may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver. A good overview of rudimentary FMCW radar processing is given in the lecture notes "Introduction to mmwave Sensing: FMCW Radars" by Sandeep Rao, Texas Instruments, 2017. The Doppler frequency at the range corresponding to the distance between the radar transceiver and ground is indicative of the radial speed at which the ground moves relative to the radar transceiver, as explained in US 2004/0138802.

Figure 3 schematically illustrates functionality 300 for controlling an example wheel 310 on the vehicle 100 by some example MSDs here comprising a friction brake 320 (such as a disc brake or a drum brake), a propulsion device 340 and a power steering arrangement 330. The friction brake 320 and the propulsion device are examples of wheel torque generating devices, which can be controlled by one or more motion support device control units 330. The control is based on, e.g., measurement data obtained from a wheel speed sensor 350 and from other vehicle state sensors, such as radar sensors, lidar sensors, and also vision based sensors such as camera sensors and infra-red detectors. An MSD control system 330 may be arranged to control one or more actuators. For instance, it is common that an MSD control system 330 is arranged to control both wheels on an axle.

The TSM function 370 plans driving operation with a time horizon of 10 seconds or so. This time frame corresponds to, e.g., the time it takes for the vehicle 100 to negotiate a curve or the like. The vehicle maneuvers, planned and executed by the TSM function, can be associated with acceleration profiles and curvature profiles which describe a desired target vehicle velocity in the vehicle forward direction and turning to be maintained for a given maneuver. The TSM function continuously requests the desired acceleration profiles $a_{req}$ and steering angles (or curvature profiles $c_{req}$) from the VMM system 360 which performs force allocation to meet the requests from the TSM function in a safe and robust manner. The VMM system 360 operates on a timescale of below one second or so and will be discussed in more detail below.

The wheel 310 has a longitudinal velocity component $v_x$ and a lateral velocity component $v_y$ (in the coordinate system of the wheel or in the coordinate system of the vehicle, depending on implementation). There is a longitudinal wheel force $F_x$ and a lateral wheel force $F_y$, and also a normal force $F_z$ acting on the wheel (not shown in Figure 3). Unless explicitly stated otherwise, the wheel forces are defined in the coordinate system of the wheel, i.e., the longitudinal force is directed in the rolling plane of the wheel, while the lateral wheel force is directed normal to the rolling plane of the wheel. The wheel has a rotational velocity $\omega_x$, and a radius R.

A vehicle speed sensor 380 based on the herein disclosed radar systems is used to determine vehicle speed over ground, which can then be translated into wheel speed components $v_x$ and/or $v_y$, in the coordinate system of the wheel. This means that the wheel steering angle $\delta$ is taken into account if the wheel is a steered wheel, while a non-steered wheel has a longitudinal velocity component which is the same as the vehicle unit to which the wheel is attached.

The type of inverse tyre models exemplified by the graph 200 in Figure 2 can be used by the VMM 360 to generate a desired tyre force at some wheel. Instead of requesting a torque corresponding to the desired tyre force, the VMM can translate the desired tyre force into an equivalent wheel slip (or, equivalently, a wheel speed relative to a speed over ground) and request this slip instead. The main advantage being that the MSD control device 330 will be able to deliver the requested torque with much higher bandwidth by maintaining operation at the desired wheel slip, using the vehicle speed $v_x$ from the vehicle speed sensor 380 and the wheel rotational velocity $\omega_x$, obtained from the wheel speed sensor 350. The control unit or units can be arranged to store one or more pre-determined inverse tyre models in memory, e.g., as look-up tables or parameterized functions. An inverse tyre model can also be arranged to be stored in the memory as a function of the current operating condition of the wheel 310.

Radar systems which can be used to determine vehicle speed over ground are also prone to performance degradation in some situations. For instance, the radar transceiver antenna may become blocked by foreign objects such as mud, snow, or ice, which may significantly reduce the energy of the received backscattered radar signal 115. The radar transceiver may also experience clutter, i.e., multiple false echoes which obscure the wanted radar signal used for determining vehicle speed over ground. Fortunately, it is often possible to detect when the radar module 110 suffers from reduced performance. When this happens, the VMM system may revert to motion estimation based on wheel speed sensors, i.e., determine vehicle speed over ground based on wheel speed instead of on the output from the radar module 110. It is appreciated that the wheel slip limit $\lambda_{lim}$ has an effect on the accuracy of a vehicle speed over ground estimation that is based on output from a wheel speed sensor. By configuring a low or even a zero wheel slip limit, the impact of wheel slip on the estimation of vehicle speed over ground can be reduced significantly. In addition to determining vehicle speed based on wheel speed sensors, IMUs can be used. An IMU provides a measure of acceleration, which can be integrated to obtain information indicative of vehicle speed.

The VMM systems proposed herein implement a redundancy feature in that a radar performance metric which is indicative of the current radar performance in terms of accuracy in the determined vehicle speed over ground is continuously monitored. The performance metric is compared to a pre-determined acceptance criterion, which could comprise anything from a simple availability criterion, i.e., that a speed over ground estimate should be available, to an estimated accuracy, such as a variance of the error comprised in the determined vehicle speed over ground. Methods for determining such performance metrics will be discussed in more detail below. When the performance metric does not meet the pre-determined acceptance criterion, the MSD coordination function of the VMM system reduces the wheel slip setpoint of one or more wheels on the heavy-duty vehicle 100. This improves the accuracy of a vehicle speed over ground estimate determined based on wheel speed, since there is no longer any significant wheel slip which affects the estimated speed over ground based on the wheel speed.

Figures 4A-C illustrate some example range-Doppler maps 400, 420, 440 which illustrate how a radar performance metric can be determined. A range-Doppler map shows detected targets in terms of their radial distance to the radar transceiver and the radial velocity with respect to the radar transceiver, as discussed above. In all example 400, 420, 440 the distance to the ground from the radar transceiver is r and the vehicle speed over ground corresponds to a radial velocity of v m/s.

In the example 400 there is a clear and distinct radar echo at range r which has a radial velocity of v m/s. There are no other strong echoes, nor any other velocity components present in the range-Doppler map. In this case the radar performance metric is assigned a high value, indicating that the vehicle speed over ground data obtained from the radar module 110 is dependable. It is noted that the radar performance metric can be a binary value assuming the value acceptable or not acceptable, or a discrete scale of values from say, one to ten, where one is the least reliable and ten is the most reliable. The radar performance metric can also comprise a continuous scale of performance values, which also could be associated with an estimated error variance of the speed over ground, perhaps based on a measured spread of Doppler at a given radar detection range.

In the example 420 of Figure 4B there is a larger spread of Doppler frequencies at the radial distance r. This increased spread or variance is indicative of an increased uncertainty in the actual speed over ground of the vehicle. Thus, if a range-Doppler map of this type is seen, the radar performance metric is most likely reduced compared to the example 400 in Figure 4A. A radar performance metric could, for example comprise a sample variance of the detected radial velocities at the expected ground radial distance r. Suppose that the i:th sample of velocity is denoted $v_i$, and that there are N samples of velocity at the radial distance of interest, then a radar performance metric can be computed as the sample variance of the velocity samples,

$$\sigma^2 = \frac{1}{N} \sum_{i=1}^{N} (v_i - \mu)^2$$

where $\mu$ is the average detected radial velocity. The radar performance metric can also be weighted based on detected signal energy, i.e.,

$$\sigma^2 = \frac{1}{N} \sum_{i=1}^{N} E_i (v_i - \mu)^2$$

where $E_i$ is a measure of the radar signal energy for sample $v_i$, where preferably

$$\sum_{i=1}^{N} E_i = 1$$

Figure 4C shows an example where there is a lot of clutter which has a detrimental effect on the radar performance. In cases where radar clutter is significant, the radar performance metric can be reduced. In cases where there is no reliable detection at the range r, then outage can be indicated, i.e., the radar performance metric can be set to a value which indicates that there is no speed over ground available from the radar module 110. The amount of clutter can, for instance, be measured in terms of average detected radar energy over the range-Doppler map.

It is appreciated that acceptance criteria can be formulated for each example of the radar performance metric. The acceptance criteria may comprise conditions on, e.g., availability, error variance, detection energy, and so on. The acceptance criteria can be determined based on experimentation, computer simulation, or mathematical analysis. The acceptance criteria for use with the systems discussed herein are preferably preconfigured, i.e., determined beforehand.

Figure 7 shows another example 700 of how the radar performance metric can be determined. In this case received radar power at a given radial range is plotted vs Doppler frequency. Intuitively, a sharp peak with high power is indicative of a reliable speed over ground determination, while a weaker and/or more diffuse peak is indicative of a reduced reliability in the determined speed over ground. Thus, the example 710 would be assigned a relatively high radar performance metric indicative of a reliably determined speed over ground, while the example 720 is a bit too weak to be trusted, and the example 730 has a large variance indicative of a reduced radar performance. Hence, the radar performance metric may comprise an element indicative of the spread of Doppler frequency for a given radial range of interest.

Figure 5 illustrates an example vehicle control function architecture applicable with the herein disclosed methods, where the TSM function 370 generates vehicle motion requests 375, which may comprise a desired steering angle $\delta$ or an equivalent curvature $c_{req}$ to be followed by the vehicle, and which may also comprise desired vehicle unit accelerations areq and also other types of vehicle motion requests, which together describe a desired motion by the vehicle along a desired path at a desired velocity profile. It is understood that the motion requests can be used as base for determining or predicting a required amount of longitudinal and lateral forces which needs to be generated in order to successfully complete a maneuver.

The VMM system 360 operates with a time horizon of about 1 second or so, and continuously transforms the acceleration profiles $a_{req}$ and curvature profiles $c_{req}$ from the TSM function into control commands for controlling vehicle motion functions, actuated by the different MSDs of the vehicle 100 which report back capabilities to the VMM, which in turn are used as constraints in the vehicle control. The VMM system 360 performs vehicle state or motion estimation, by a motion estimation function 510, i.e., the VMM system 360 continuously determines a vehicle state s comprising positions, speeds, accelerations, and articulation angles of the different units in the vehicle combination by monitoring operations using various sensors 550 arranged on the vehicle 100, often but not always in connection to the MSDs. An important input to the motion estimation function 510 may of course be the signals from vehicle speed sensor 380 and the wheel speed sensors 350 on the heavy duty vehicle 100, where the vehicle speed sensor 380 comprises a radar-based system as discussed herein.

The result of the motion estimation 510, i.e., the estimated vehicle state s, is input to a force generation module 520 which determines the required global forces V=[$V_1$, $V_2$] for the different vehicle units to cause the vehicle 100 to move according to the requested acceleration and curvature profiles $a_{req}$, $c_{req}$, and to behave according to the desired vehicle behavior. The required global force vector V is input to an MSD coordination function 530 which allocates wheel forces and coordinates other MSDs such as steering and suspension. The MSD coordination function outputs an MSD control allocation for the i:th wheel, which may comprise any of a torque $T_i$, a longitudinal wheel slip $\lambda_i$, a wheel rotational

speed $\omega_i$, and/or a wheel steering angle $\delta_i$. The coordinated MSDs then together provide the desired lateral Fy and longitudinal Fx forces on the vehicle units, as well as the required moments Mz, to obtain the desired motion by the vehicle combination 100.

Thus, according to some aspects of the present disclosure, the VMM system 360 manages both force generation and MSD coordination, i.e., it determines what forces that are required at the vehicle units in order to fulfil the requests from the TSM function 370, for instance to accelerate the vehicle according to a requested acceleration profile requested by TSM and/or to generate a certain curvature motion by the vehicle also requested by TSM. The forces may comprise e.g., yaw moments Mz, longitudinal forces Fx and lateral forces Fy, as well as different types of torques to be applied at different wheels. The forces are determined such as to generate the vehicle behavior which is expected by the TSM function in response to the control inputs generated by the TSM function 370.

The MSD coordination function 530 may implement a mathematical optimization routine which finds an MSD force allocation that corresponds to the required global forces determined by the force generation module 520. The mathematical optimization routine involves constraints, which are limits on the forces possible to generate by a given MSD. Thus, the MSD coordination function 530 can be used to reduce or even remove the wheel slip on one or more wheels 310, which facilitates a more accurate determination of vehicle speed using wheel speed sensors. The constraints may be imposed as a wheel slip limit or as a torque limit, which can be set to some small value or even to a zero value where the wheel is essentially in free-rolling state.

One or more radar modules 110 forming part of the sensors 550 are arranged to determine respective radar performance metrics 555 and to output these metrics to the MSD coordination function 530, an optionally also to the motion estimation function 510. This way the MSD coordination function obtains information indicating if the speed over ground determined by the radar module or modules is accurate or not, i.e., if the data from the radar sensors fulfil the predetermined acceptance criterion or not. In case the data from the radar sensors is not reliable enough to perform vehicle motion management, the MSD coordination function reduces wheel slip of one or more wheels on the heavy-duty vehicle, e.g., by introducing constraints into the mathematical optimization problem solved to obtain the MSD coordination solution which fulfils the global force requirements. The reduction can be temporary or extend over a longer period of time. In case the slip reduction is temporary, the function is similar to an anti-lock braking function (ABS) which intermittently reduces wheel slip. When the wheel slip of a given wheel is reduced, the vehicle speed over ground data obtainable from the wheel speed sensors of that wheel increases. Thus, in case of reduced performance by the radar modules, vehicle speed can still be determined based on wheel speed data.

Particular advantages can be obtained if the wheel slip set-points of the wheels on the heavy-duty vehicle are reduced temporarily in a sequence. Such that the slip is temporarily reduced for each wheel in the sequence for a short period of time. The sequence may involve periodic application of wheel slip or torque constraints on the left and the right-hand side of the vehicle, i.e., first a wheel on the left-hand side of the vehicle is placed in a low wheel slip condition, and then a wheel on the right-hand side of the vehicle is placed in a low wheel slip condition, whereupon once more a wheel on the left-hand side is placed in low slip condition. This provides an opportunity for distributing the effects of placing one or more wheels in a low wheel slip condition. The wheel in low slip condition used for estimating vehicle speed can also be switched between two or more axles in sequence. The time period where each wheel is placed in low slip condition need not be very long, normally one second or less is sufficient to get an estimate of vehicle speed from the wheel speed sensor which is not significantly affected by wheel slip.

According to some example realizations of the technique, an IMU is also used to estimate vehicle speed over ground. The IMU primarily provides acceleration data, which can be integrated in order to obtain speed information. A problem with most IMUs used for determining vehicle speed over ground is the drift caused by inaccuracies and biases in the IMU output. The VMM system disclosed herein can also be used to calibrate or reset the vehicle sped over ground determination. This procedure then involves the VMM determining that there is a discrepancy between the IMU data and the estimated vehicle state. In response to determining that there is a discrepancy, the VMM system may add constraints to the MSD coordination function optimization routine which places one or more wheels in a free-rolling condition or at least in a reduced wheel slip condition where the wheel speed data better reflects the true vehicle sped over ground. The vehicle speed over ground information obtained in this way can then be used to calibrate the output from the IMU.

To summarize, there is illustrated an example VMM system 360 for a heavy-duty vehicle 100. The system comprises at least one radar module 110 configured to determine a speed over ground of the heavy-duty vehicle 100. The radar modules were discussed above, and example mounting of the radar modules to a heavy duty vehicle can be seen in Figure 1. The radar modules are able to determine vehicle speed over ground in one or two dimensions based on a radial motion of the ground relative to the radar transceiver. The system also comprises a motion estimation function 510 configured to estimate a vehicle motion state s based at least in part on the speed over ground, and an MSD coordination function 530 configured to coordinate actuation of a plurality of MSDs of the heavy-duty vehicle in dependence of a vehicle motion request 375 and the vehicle motion state s. Both motion estimation and MSD coordination are generally well known in the art and will therefore not be discussed in more detail herein. An important input to the motion estimation function is of course the vehicle speed over ground. A particularly accurate vehicle motion estimation can be performed if vehicle speed over ground is obtained from a plurality of radar modules distributed over the heavy-duty vehicle 100, as shown in Figure 6, which illustrates an example heavy-duty vehicle 100 with a towing truck configured to tow a trailer unit in a known manner. The vehicle 100 comprises a system 600 of radar modules 110 distributed over the heavy-duty vehicle 100. Each radar module provides information related to the longitudinal (and potentially also the lateral) velocity of the vehicle with respect to the road surface at the respective location. The radar modules may also comprise inertial measurement units (IMU), which provide information about the acceleration at the location on the vehicle. This enables the VMM system 360 to determine relative vehicle motion of the different parts of the vehicle, and also a rotation, such as a yaw motion $v\omega$. Wheel end modules, as discussed herein, can also be distributed over a heavy-duty vehicle 100 in this manner, allowing the VMM system 360 to obtain a detailed view of the motion of the vehicle.

The radar module 110 is arranged to output a radar performance metric 555 to the MSD coordination function 530 indicative of a current accuracy of the determined speed over ground. This performance metric was discussed above, and has an important function. The radar performance metric allows the MSD coordination function to determine when the speed over ground information reported from one or more of the radar modules 110 on the heavy-duty vehicle is not of acceptable quality. The MSD coordination function 530 is arranged to reduce a wheel slip set-point of one or more wheels 310 of the heavy-duty vehicle 100 in case the radar performance metric does not meet the pre-determined acceptance criterion. This reduction in wheel slip significantly improves the accuracy of an estimated vehicle speed over ground which is based on wheel speed, i.e., based on an output signal from a wheel speed sensor such as a Hall effect sensor or a rotary encoder.

According to some aspects, the MSD coordination function 530 is arranged to set a wheel slip request and/or a torque request for one or more wheels 310 of the heavy-duty vehicle 100 to zero in case the radar performance metric does not meet the pre-determined acceptance criterion. Thus, there will be no positive nor negative wheel forces generated in the longitudinal direction of the wheel, which means that the impact on vehicle speed determination based on wheel speed of the wheel is minimized or at least reduced.

According to some aspects, the MSD coordination function 530 is arranged to reduce a wheel slip set-point of the one or more wheels 310 of the heavy-duty vehicle 100 in a sequence, where each wheel in the sequence is placed in a low slip condition for a pre-determined short duration of time, such as a second or half a second. This way the actuation over the vehicle can be maintained, since each wheel will only be placed in a low slip condition for a short period of time, after which it can resume force generation.

The MSD coordination function 530 is optionally configured to coordinate actuation of the plurality of MSDs of the heavy-duty vehicle based on the solution to a constrained optimization problem, where one or more constraints of the constrained optimization problem is arranged to be configured in dependence of the radar performance metric in relation to the pre-determined acceptance criterion. This means that the MSD coordination function can simply solve the optimization problem under the constraints that allocated wheel slips at one or more wheels of the heavy-duty vehicle should be kept below some threshold, or even be set to zero.

The MSD coordination function 530 can also be arranged to output data 535 indicative of a wheel slip set-point and/or a torque set-point of a wheel 310 on the heavy-duty vehicle 100 to the motion estimation function 510. The motion estimation function 510 is then able to estimate the vehicle motion state s based on the data 535 indicative of wheel slip set-point and/or torque set-point in a more reliable manner, since it now knows how the wheels will be slipping in the near future. The MSD coordination function 530 can for instance communicate the slip limits it has imposed on the different wheels, and the motion estimation function 510 can then determine which wheel speed sensor signals that it can use for reliably estimating vehicle speed over ground. For instance, the motion estimation function 510 can estimate the vehicle motion state s based on wheel speed in case the radar performance metric does not meet a pre-determined acceptance criterion, and on the speed over ground from the radar module 110 otherwise.

The motion estimation function 510 can also base the estimate of vehicle motion state s on a weighted combination of wheel speed sensor data and radar module speed over ground, where the weights of the weighted combination is configured in dependence of the data 535 indicative of wheel slip set-point and/or torque set-point. This means that the motion estimation function performs a type of sensor fusion, which accounts for an estimated accuracy of the different sensors.

The sensor fusion operation will assign more weight to the data from the radar module or modules in case the radar performance metric is high compared to when the radar performance metric is low. When the radar performance metric indicates radar module outage, i.e., that there is no relevant data in the output from the radar module, then the motion estimation will be based solely on the wheel speed sensors, and the wheel slip of at least one of these wheel will be reduced by the actions of the MSD coordination function in response to the radar performance metric. Generally, an estimated parameter $\hat{v}$, such as a vehicle speed over ground, which is estimated based on a weighted combination of N parameters

$\{v_1, v_2, ..., v_N\}$ can be written as

$$\hat{v} = \sum_{i=1}^{N} w_i \, v_i$$

where $\sum_{i=1}^{N} w_i = 1$, and the relative magnitudes of the weights $w_i$ is configured in dependence of the perceived reliability of the corresponding parameter $v_i$. Thus, in case the radar performance is very good, then the weight of the radar parameter will be close to one, but if the radar performance is not deemed accurate, then the relative weight will be reduced in relation to the weights of the other parameters, such as the estimate coming from the GPS system, the estimate coming from the wheel speed sensors, and the estimate determined based on the output of the IMU.

With reference also to Figure 6, the VMM system 360 may comprise a plurality of radar modules 110 distributed over the vehicle. The MSD coordination function 530 can then be arranged to reduce a wheel slip set-point of a wheel 310 of the heavy-duty vehicle 100 located in connection to a radar module 110 reporting a radar performance metric which does not meet the pre-determined acceptance criterion. This way the data of vehicle speed over ground is complemented at locations of poor radar performance, by the reduced wheel slip and the data from the corresponding wheel speed sensor.

Figures 3 and 5 also illustrate some separate components of the VMM system disclosed herein. For instance, a radar module 110 for determining speed over ground of a heavy-duty vehicle 100 is described herein. The module comprises a radar transceiver configured to transmit and to receive a radar signal 115 as illustrated also in Figure 1. The radar module comprises a control unit arranged to determine the speed over ground based on the received radar signal. The control unit is also arranged to determine a radar performance metric 555 indicative of an accuracy of the determined speed over ground. The module comprises an output port for outputting the radar performance metric 555 to an MSD coordination function 530 of the heavy-duty vehicle 100.

There is also disclosed herein a control unit arranged to execute an MSD coordination function 530. The control unit comprises an input port arranged to receive a radar performance metric 555. The control unit is configured to coordinate actuation of a plurality of MSDs of the heavy-duty vehicle in dependence of a vehicle motion request 375 and in dependence of a vehicle motion state s. The control unit is also arranged to reduce a wheel slip set-point of one or more wheels 310 of the heavy-duty vehicle 100 in case the radar performance metric does not meet a pre-determined acceptance criterion.

There is furthermore disclosed herein a control unit arranged to execute a motion estimation function 510 for a heavy-duty vehicle 100. The control unit comprises a first input port arranged to receive a speed over ground $v_x$, $v_y$ of the heavy-duty vehicle 100 and also a wheel speed $\omega_x$ associated with a wheel 310 of the heavy-duty vehicle 100. The control unit comprises a second input port arranged to receive data 535 indicative of a wheel slip set-point and/or a torque set-point of the wheel 310. The control unit is arranged to determine the vehicle motion state based on a weighted combination of the speed over ground $v_x$, $v_y$ and the wheel speed $\omega_x$, where the weights of the weighted combination is determined based on the data 535 indicative of the wheel slip set-point and/or the torque set-point of the wheel 310.

Figure 8 is a flow chart illustrating a method which summarizes some of the key concepts discussed above. There is illustrated a computer implemented method for performing a VMM function on a heavy-duty vehicle 100. The method comprises configuring S1 at least one radar module 110 to determine a speed over ground of the heavy-duty vehicle 100, configuring S2 a motion estimation function 510 to estimate a vehicle motion state s based at least in part on the speed over ground, and configuring S3 a motion support device, MSD, coordination function 530 to coordinate actuation of a plurality of MSDs of the heavy-duty vehicle in dependence of a vehicle motion request 375 and the vehicle motion state s. The method further comprises outputting S4 a radar performance metric 555 from the radar module 110 to the MSD coordination function 530 indicative of an accuracy of the determined speed over ground, and reducing S5 a wheel slip set-point of one or more wheels 310 of the heavy-duty vehicle 100, by the MSD coordination function 530, in case the radar performance metric does not meet a pre-determined acceptance criterion.

Figure 9 schematically illustrates, in terms of a number of functional units, the components of a control unit 900 according to embodiments of the discussions herein, such as any of the MSD control system 330 or the VMM system 360. Processing circuitry 910 is provided using any combination of one or more of a suitable central processing unit CPU, multiprocessor, microcontroller, digital signal processor DSP, etc., capable of executing software instructions stored in a computer program product, e.g., in the form of a storage medium 930. The processing circuitry 910 may further be provided as at least one application specific integrated circuit ASIC, or field programmable gate array FPGA. Particularly, the processing circuitry 910 is configured to cause the control unit 900 to perform a set of operations, or steps, such as the methods discussed in connection to Figure 8 and generally herein. For example, the storage medium 930 may store the set of operations, and the processing circuitry 910 may be configured to retrieve the set of operations from the storage medium 930 to cause the control unit 900 to perform the set of operations. The set of operations may be provided as a set of executable instructions. Thus, the processing circuitry 910 is thereby arranged to execute methods as herein disclosed.

The storage medium 930 may also comprise persistent storage, which, for example, can be any single one or combination of magnetic memory, optical memory, solid state memory or even remotely mounted memory.

The control unit 900 may further comprise an interface 920 for communications with at least one external device. As such the interface 920 may comprise one or more transmitters and receivers, comprising analogue and digital components and a suitable number of ports for wireline or wireless communication.

The processing circuitry 910 controls the general operation of the control unit 900, e.g., by sending data and control signals to the interface 920 and the storage medium 930, by receiving data and reports from the interface 920, and by retrieving data and instructions from the storage medium 930. Other components, as well as the related functionality, of the control node are omitted in order not to obscure the concepts presented herein.

Figure 10 illustrates a computer readable medium 1010 carrying a computer program comprising program code means 1020 for performing the methods illustrated in Figure 8 and the techniques discussed herein, when said program product is run on a computer. The computer readable medium and the code means may together form a computer program product 1000.

**Claims**

1. A vehicle motion management, VMM, system (360) for a heavy-duty vehicle (100), the system comprising

    at least one radar module (110) configured to determine a speed over ground of the heavy-duty vehicle (100),
    a motion estimation function (510) configured to estimate a vehicle motion state (s) based at least in part on the speed over ground, and
    a motion support device, MSD, coordination function (530) configured to coordinate actuation of a plurality of MSDs of the heavy-duty vehicle in dependence of a vehicle motion request (375) and the vehicle motion state (s),
    **characterized in that**
    the radar module (110) is arranged to output a radar performance metric (555) to the MSD coordination function (530) indicative of a current accuracy of the determined speed over ground, where the MSD coordination function (530) is arranged to reduce a wheel slip set-point of one or more wheels (310) of the heavy-duty vehicle (100) in case the radar performance metric does not meet a pre-determined acceptance criterion.

2. The VMM system (360) according to claim 1, where the MSD coordination function (530) is arranged to set a wheel slip request for one or more wheels (310) of the heavy-duty vehicle (100) to zero in case the radar performance metric does not meet the pre-determined acceptance criterion.

3. The VMM system (360) according to claim 1 or 2, where the MSD coordination function (530) is arranged to set a torque request for one or more wheels (310) of the heavy-duty vehicle (100) to zero in case the radar performance metric does not meet the pre-determined acceptance criterion.

4. The VMM system (360) according to any previous claim, where the MSD coordination function (530) is configured to coordinate actuation of the plurality of MSDs of the heavy-duty vehicle based on the solution to a constrained optimization problem, where one or more constraints of the constrained optimization problem is arranged to be configured in dependence of the radar performance metric in relation to the pre-determined acceptance criterion.

5. The VMM system (360) according to any previous claim, where the MSD coordination function (530) is arranged to output data (535) indicative of a wheel slip set-point and/or a torque set-point of a wheel (310) on the heavy-duty vehicle (100) to the motion estimation function (510), where the motion estimation function (510) is arranged to estimate the vehicle motion state (s) based on the data (535) indicative of wheel slip set-point and/or torque set-point.

6. The VMM system (360) according to any previous claim, where the motion estimation function (510) is arranged to estimate the vehicle motion state (s) based on wheel speed in case the radar performance metric does not meet a pre-determined acceptance criterion, and on the speed over ground from the radar module (110) otherwise.

7. The VMM system (360) according to any of claims 5-6, where the motion estimation function (510) is arranged to base the estimate of vehicle motion state (s) on a weighted combination of wheel speed sensor data and radar module speed over ground, where the weights of the weighted combination is configured in dependence of the data (535) indicative of wheel slip set-point and/or torque set-point.

8. The VMM system (360) according to any previous claim, comprising a plurality of radar modules (110), where the MSD coordination function (530) is arranged to reduce a wheel slip set-point of a wheel (310) of the heavy-duty vehicle (100) located in connection to a radar module (110) reporting a radar performance metric which does not meet the pre-determined acceptance criterion.

9. The VMM system (360) according to any previous claim, where the MSD coordination function (530) is arranged to reduce a wheel slip set-point of the one or more wheels (310) of the heavy-duty vehicle (100) in a sequence, where each wheel in the sequence is placed in a low slip condition for a pre-determined duration of time.

10. The VMM system (360) according to any previous claim, arranged to calibrate an estimated vehicle speed over ground determined based on an output signal from an inertial measurement unit, IMU, in response to the MSD coordination function (530) reducing a wheel slip set-point of one or more wheels (310) of the heavy-duty vehicle (100).

11. A heavy-duty vehicle (100) comprising a VMM system (360) according to any previous claim.

12. A computer implemented method for performing a vehicle motion management, VMM, function on a heavy-duty vehicle (100), the method comprising

    configuring (S1) at least one radar module (110) to determine a speed over ground of the heavy-duty vehicle (100),
    configuring (S2) a motion estimation function (510) to estimate a vehicle motion state (s) based at least in part on the speed over ground, and
    configuring (S3) a motion support device, MSD, coordination function (530) to coordinate actuation of a plurality of MSDs of the heavy-duty vehicle in dependence of a vehicle motion request (375) and the vehicle motion state (s), the method further comprising
    outputting (S4) a radar performance metric (555) from the radar module (110) to the MSD coordination function (530) indicative of an accuracy of the determined speed over ground, and
    reducing (S5) a wheel slip set-point of one or more wheels (310) of the heavy-duty vehicle (100), by the MSD coordination function (530), in case the radar performance metric does not meet a pre-determined acceptance criterion.

13. A computer program (1020) comprising program code means for performing the steps of claim 12 when the program is run on a computer.

14. A radar module (110) for determining speed over ground of a heavy-duty vehicle (100), the module comprising

    a radar transceiver configured to transmit and to receive a radar signal (115),
    a control unit arranged to determine the speed over ground based on the received radar signal, **characterized in that**
the control unit is also arranged to determine a radar performance metric (555) indicative of an accuracy of the determined speed over ground, the module comprising an output port for outputting the radar performance metric (555) to a motion support device, MSD, coordination function (530) of the heavy-duty vehicle (100).

15. A control unit arranged to execute a motion support device, MSD, coordination function (530), wherein the control unit is configured to coordinate actuation of a plurality of MSDs of the heavy-duty vehicle in dependence of a vehicle motion request (375) and in dependence of a vehicle motion state (s),
**characterised in that** said control unit comprises an input port arranged to receive a radar performance metric (555) and
wherein the control unit is arranged to reduce a wheel slip set-point of one or more wheels (310) of the heavy-duty vehicle (100) in case the radar performance metric does not meet a pre-determined acceptance criterion.

16. A control unit arranged to execute a motion estimation function (510) for a heavy-duty vehicle (100), the control unit comprising a first input port arranged to receive a speed over ground $(v_x, v_y)$ of the heavy-duty vehicle (100) and also a wheel speed $(\omega_x)$ associated with a wheel (310) of the heavy-duty vehicle (100),
**characterized in that** said control unit comprises a second input port arranged to receive data (535) indicative of a wheel slip set-point and/or a torque set-point of the wheel (310), wherein the control unit is arranged to determine the vehicle motion state based on a weighted combination of the speed over ground $(v_x, v_y)$ and the wheel speed $(\omega_x)$, where the weights of the weighted combination is determined based on the data (535) indicative of the wheel slip set-point and/or the torque set-point of the wheel (310).

**Patentansprüche**

1. System für Fahrzeugbewegungsmanagement, VMM, (360) für ein Schwerlastfahrzeug (100), das System umfassend

    mindestens ein Radarmodul (110), das konfiguriert ist, um eine Geschwindigkeit des Schwerlastfahrzeugs (100) über Grund zu bestimmen, eine Bewegungsschätzungsfunktion (510), die konfiguriert ist, um einen Fahrzeugbewegungszustand (s) mindestens teilweise basierend auf der Geschwindigkeit über Grund zu schätzen, und

eine Koordinierungsfunktion (530) für Bewegungsunterstützungsvorrichtung, MSD, die konfiguriert ist, um eine Betätigung einer Vielzahl von MSD des Schwerlastfahrzeugs abhängig von einer Fahrzeugbewegungsanforderung (375) und dem Fahrzeugbewegungszustand (s) zu koordinieren,

**dadurch gekennzeichnet, dass**

das Radarmodul (110) angeordnet ist, um eine Radarleistungskennzahl (555) an die MSD-Koordinierungsfunktion (530) auszugeben, die indikativ für eine aktuelle Genauigkeit der bestimmten Geschwindigkeit über Grund ist, wobei die MSD-Koordinierungsfunktion (530) angeordnet ist, um einen Radschlupf-Sollwert eines oder mehrerer Räder (310) des Schwerlastfahrzeugs (100) zu reduzieren, falls die Radarleistungskennzahl ein vorbestimmtes Annahmekriterium nicht erfüllt.

2. VMM-System (360) nach Anspruch 1, wobei die MSD-Koordinierungsfunktion (530) angeordnet ist, um eine Radschlupfanforderung für ein oder mehrere Räder (310) des Schwerlastfahrzeugs (100) auf Null zu setzen, falls die Radarleistungskennzahl das vorbestimmte Annahmekriterium nicht erfüllt.

3. VMM-System (360) nach Anspruch 1 oder 2, wobei die MSD-Koordinierungsfunktion (530) angeordnet ist, um eine Drehmomentanforderung für ein oder mehrere Räder (310) des Schwerlastfahrzeugs (100) auf Null zu setzen, falls die Radarleistungskennzahl das vorbestimmte Annahmekriterium nicht erfüllt.

4. VMM-System (360) nach einem vorherigen Anspruch, wobei die MSD-Koordinierungsfunktion (530) konfiguriert ist, um eine Betätigung der Vielzahl von MSD des Schwerlastfahrzeugs basierend auf der Lösung eines eingeschränkten Optimierungsproblems zu koordinieren, wobei eine oder mehrere Einschränkungen des eingeschränkten Optimierungsproblems angeordnet sind, um abhängig von der Radarleistungskennzahl in Bezug auf das vorbestimmte Annahmekriterium konfiguriert zu werden.

5. VMM-System (360) nach einem der vorhergehenden Ansprüche, wobei die MSD-Koordinationsfunktion (530) angeordnet ist, um Daten (535), die indikativ für einen Radschlupf-Sollwert und/oder einen Drehmoment-Sollwert eines Rads (310) an dem Schwerlastfahrzeug (100) sind, an die Bewegungsschätzungsfunktion (510) auszugeben, wobei die Bewegungsschätzungsfunktion (510) angeordnet ist, um den Fahrzeugbewegungszustand (s) basierend auf den Daten (535) zu schätzen, die indikativ für den Radschlupf-Sollwert und/oder den Drehmoment-Sollwert sind.

6. VMM-System (360) nach einem der vorherigen Ansprüche, wobei die Bewegungsschätzungsfunktion (510) angeordnet ist, um den Fahrzeugbewegungszustand (s) basierend auf der Radgeschwindigkeit zu schätzen, falls die Radarleistungskennzahl ein vorbestimmtes Annahmekriterium nicht erfüllt, und andernfalls anhand der Geschwindigkeit über Grund des Radarmoduls (110) zu schätzen.

7. VMM-System (360) nach einem der Ansprüche 5-6, wobei die Bewegungsschätzungsfunktion (510) angeordnet ist, um die Schätzung des Fahrzeugbewegungszustands (s) auf einer gewichteten Kombination aus Raddrehzahlsensordaten und Radarmodul-Geschwindigkeit über Grund zu basieren, wobei die Gewichtungen der Kombination abhängig von den Daten (535) konfiguriert sind, die indikativ für den Radschlupf-Sollwert und/oder den Drehmomentvorgabewert sind.

8. VMM-System (360) nach einem der vorherigen Ansprüche, umfassend eine Vielzahl von Radarmodulen (110), wobei die MSD-Koordinierungsfunktion (530) angeordnet ist, um einen Radschlupf-Sollwert eines Rads (310) des Schwerlastfahrzeugs (100) zu reduzieren, das sich in Verbindung mit einem Radarmodul (110) befindet, das eine Radarleistungskennzahl meldet, die das vorbestimmte Annahmekriterium nicht erfüllt.

9. VMM-System (360) nach einem der vorherigen Ansprüche, wobei die MSD-Koordinierungsfunktion (530) angeordnet ist, um die jeweiligen Radschlupf-Sollwerte des einen oder der mehreren Räder (310) des Schwerlastfahrzeugs (100) in einer Sequenz zu reduzieren, in der jedes Rad in der Sequenz über eine vorbestimmte Zeitdauer in einen Zustand mit geringem Schlupf versetzt wird.

10. VMM-System (360) nach einem der vorherigen Ansprüche, das angeordnet ist, um eine geschätzte Fahrzeuggeschwindigkeit über Grund, die basierend auf einem Ausgangssignal von einer Trägheitsmesseinheit (IMU) bestimmt wird, als Reaktion darauf, dass die MSD-Koordinierungsfunktion (530) einen Radschlupf-Sollwert eines oder mehrerer Räder (310) des Schwerlastfahrzeugs (100) reduziert, zu kalibrieren.

11. Schwerlastfahrzeug (100), umfassend ein VMM-System (360) nach einem der vorherigen Ansprüche.

12. Computerimplementiertes Verfahren zum Durchführen einer Funktion eines Fahrzeugbewegungsmanagements (VMM) an einem Schwerlastfahrzeug (100), das Verfahren umfassend

Konfigurieren (S1) von mindestens einem Radarmodul (110), um eine Geschwindigkeit des Schwerlastfahrzeugs (100) über Grund zu bestimmen,

Konfigurieren (S2) einer Bewegungsschätzungsfunktion (510), um einen Fahrzeugbewegungszustand (s) mindestens teilweise basierend auf der Geschwindigkeit über Grund zu schätzen, und

Konfigurieren (S3) einer Koordinierungsfunktion (530) für Bewegungsunterstützungsvorrichtung (MSD), um eine Betätigung einer Vielzahl von MSD des Schwerlastfahrzeugs abhängig von einer Fahrzeugbewegungsanforderung (375) und dem Fahrzeugbewegungszustand (s) zu koordinieren, das Verfahren ferner umfasst

Ausgeben (S4) einer Radarleistungskennzahl (555) von dem Radarmodul (110) an die MSD-Koordinierungsfunktion (530), die indikativ für eine Genauigkeit der bestimmten Geschwindigkeit über Grund ist, und

Reduzieren (S5) eines Radschlupf-Sollwerts von einem oder mehreren Rädern (310) des Schwerlastfahrzeugs (100) durch die MSD-Koordinierungsfunktion (530), falls die Radarleistungskennzahl ein vorbestimmtes Annahmekriterium nicht erfüllt.

13. Computerprogramm (1020), umfassend Programmcodeeinrichtungen zum Durchführen der Schritte von Anspruch 12, wenn das Programm auf einem Computer läuft.

14. Radarmodul (110) zum Bestimmen der Geschwindigkeit eines Schwerlastfahrzeugs (100) über Grund, das Modul umfassend einen Radar-Sendeempfänger, der konfiguriert ist, um ein Radarsignal (115) zu senden und zu empfangen,

eine Steuereinheit, die angeordnet ist, um die Geschwindigkeit über Grund basierend auf dem empfangenen Radarsignal zu bestimmen, **dadurch gekennzeichnet, dass**

die Steuereinheit ferner angeordnet ist, um eine Radarleistungskennzahl (555) zu bestimmen, die indikativ für eine Genauigkeit der bestimmten Geschwindigkeit über Grund ist,

das Modul umfassend einen Ausgangsanschluss zum Ausgeben der Radarleistungskennzahl (555) an eine Koordinierungsfunktion (530) für Bewegungsunterstützungsvorrichtung, MSD, des Schwerlastfahrzeugs (100).

15. Steuereinheit, die angeordnet ist, um eine Koordinierungsfunktion (530) für Bewegungsunterstützungsvorrichtung (MSD) auszuführen,

wobei die Steuereinheit konfiguriert ist, um eine Betätigung einer Vielzahl von MSD des Schwerlastfahrzeugs abhängig von einer Fahrzeugbewegungsanforderung (375) und abhängig von einem Fahrzeugbewegungszustand (s) zu koordinieren, **dadurch gekennzeichnet , dass** die Steuereinheit einen Eingangsanschluss umfasst,

der angeordnet ist, um eine Radarleistungskennzahl (555) zu empfangen, und

wobei die Steuereinheit angeordnet ist, um einen Radschlupf-Sollwert eines oder mehrerer Räder (100) des Schwerlastfahrzeugs (100) zu reduzieren, falls die Radarleistungskennzahl ein vorbestimmtes Annahmekriterium nicht erfüllt.

16. Steuereinheit, die angeordnet ist, um eine Bewegungsschätzungsfunktion (510) für ein Schwerlastfahrzeug (100) auszuführen,

die Steuereinheit umfassend einen ersten Eingangsanschluss, der angeordnet ist, um eine Geschwindigkeit über Grund ($v_x$, $v_y$) des Schwerlastfahrzeugs (100) und auch eine Radgeschwindigkeit ($\omega_x$), die mit einem Rad (310) des Schwerlastfahrzeugs (100) assoziiert ist, zu empfangen,

**dadurch gekennzeichnet , dass** die Steuereinheit Folgendes umfasst einen zweiten Eingangsanschluss, der angeordnet ist, um Daten (535) zu empfangen, die indikativ für einen Radschlupf-Sollwert und/oder einen Drehmoment-Sollwert des Rads (310) sind, wobei die Steuereinheit angeordnet ist, um den Fahrzeugbewegungszustand basierend auf einer gewichteten Kombination der Geschwindigkeit über Grund ($v_x$ , $v_y$) und der Radgeschwindigkeit ($\omega_x$) zu bestimmen, wobei die Gewichte der gewichteten Kombination basierend auf den Daten (535) bestimmt werden, die indikativ für den Radschlupf-Sollwert und/oder den Drehmoment-Sollwert des Rads (310) sind.

**Revendications**

1. Système de gestion de mouvement de véhicule (VMM) (360) pour un véhicule utilitaire lourd (100), le système comprenant

au moins un module radar (110) configuré pour déterminer une vitesse au sol du véhicule utilitaire lourd (100),

une fonction d'estimation de mouvement (510) configurée pour estimer un état de mouvement de véhicule (s) fondé au moins en partie sur la vitesse au sol, et une fonction de coordination de dispositif d'assistance au mouvement (MSD) (530) configurée pour commander l'actionnement d'une pluralité de MSD du véhicule utilitaire lourd en fonction d'une demande de mouvement de véhicule (375) et de l'état de mouvement de véhicule (s),

**caractérisé en ce que**

le module radar (110) est agencé pour fournir une mesure de performance radar (555) à la fonction de coordination de MSD (530) indiquant une précision actuelle de la vitesse au sol déterminée,

où la fonction de coordination de MSD (530) est agencée pour réduire un point de consigne de patinage de roue d'une ou de plusieurs roues (310) du véhicule utilitaire lourd (100) si la mesure de performance radar ne satisfait pas à un critère d'acceptation prédéterminé.

2. Système de VMM (360) selon la revendication 1, où la fonction de coordination de MSD (530) est agencée pour mettre à zéro une demande de patinage de roue pour une ou plusieurs roues (310) du véhicule utilitaire lourd (100) si la mesure de performance radar ne satisfait pas au critère d'acceptation prédéterminé.

3. Système de VMM (360) selon la revendication 1 ou 2, dans lequel la fonction de coordination de MSD (530) est agencée pour mettre à zéro une demande de couple pour une ou plusieurs roues (310) du véhicule utilitaire lourd (100) si la mesure de performance radar ne satisfait pas au critère d'acceptation prédéterminé.

4. Système de VMM (360) selon l'une quelconque des revendications précédentes, où la fonction de coordination de MSD (530) est configurée pour coordonner l'actionnement de la pluralité de MSD du véhicule utilitaire lourd sur la base de la solution à un problème d'optimisation contraint, où une ou plusieurs contraintes du problème d'optimisation contraint sont agencées pour être configurées en fonction de la mesure de performance radar par rapport au critère d'acceptation prédéterminé.

5. Système de VMM (360) selon l'une quelconque des revendications précédentes, où la fonction de coordination de MSD (530) est agencée pour fournir des données (535) indiquant un point de consigne de patinage de roue et/ou un point de consigne de couple d'une roue (310) sur le véhicule utilitaire lourd (100) pour la fonction d'estimation de mouvement (510), où la fonction d'estimation de mouvement (510) est agencée pour estimer l'état de mouvement de véhicule (s) sur la base des données (535) indiquant un point de consigne de patinage de roue et/ou un point de consigne de couple.

6. Système de VMM (360) selon l'une quelconque des revendications précédentes, où la fonction d'estimation du mouvement (510) est agencée pour estimer l'état de mouvement de véhicule (s) sur la base de la vitesse de roue dans le cas où la mesure de performance radar ne satisfait pas à un critère d'acceptation prédéterminé, et sur la base de la vitesse au sol provenant du module radar (110) dans le cas contraire.

7. Système de VMM (360) selon l'une quelconque des revendications 5 et 6, où la fonction d'estimation de mouvement (510) est agencée pour fonder l'estimation de l'état de mouvement de véhicule (s) sur une combinaison pondérée de données de capteur de vitesse de roue et de la vitesse au sol du module radar, où les poids de la combinaison pondérée sont configurés en fonction des données (535) indiquant le point de consigne de patinage de roue et/ou le point de consigne de couple.

8. Système de VMM (360) selon l'une quelconque des revendications précédentes, comprenant une pluralité de modules radar (110), où la fonction de coordination de MSD (530) est agencée pour réduire un point de consigne de patinage de roue (310) du véhicule utilitaire lourd (100) située en relation avec un module radar (110) rapportant une mesure de performance radar ne satisfaisant pas au critère d'acceptation prédéterminé.

9. Système de VMM (360) selon l'une quelconque des revendications précédentes, où la fonction de coordination de MSD (530) est agencée pour réduire un point de consigne de patinage de roue des une ou plusieurs roues (310) du véhicule utilitaire lourd (100) selon une séquence, où chaque roue dans la séquence est placée dans une condition de faible patinage pour une durée prédéterminée.

10. Système de VMM (360) selon l'une quelconque des revendications précédentes, agencé pour calibrer une vitesse au sol de véhicule estimée déterminée sur la base d'un signal de sortie d'une unité de mesure inertielle (IMU), en réponse à la fonction de coordination de MSD (530) réduisant un point de consigne de patinage de roue d'une ou plusieurs roues (310) du véhicule utilitaire lourd (100).

11. Véhicule utilitaire lourd (100) comprenant un système de VMM (360) selon l'une quelconque des revendications précédentes.

12. Procédé mis en œuvre par ordinateur permettant d'exécuter une fonction de gestion de mouvement de véhicule (VMM) sur un véhicule utilitaire lourd (100), le procédé comprenant

la configuration (S1) d'au moins un module radar (110) pour déterminer une vitesse au sol du véhicule utilitaire lourd (100),

la configuration (S2) d'une fonction d'estimation de mouvement (510) pour estimer un état de mouvement de véhicule (s) fondé au moins en partie sur la vitesse au sol, et

la configuration (S3) d'une fonction de coordination de dispositif d'assistance au mouvement (MSD) (530) pour commander l'actionnement d'une pluralité de MSD du véhicule utilitaire lourd en fonction d'une demande de mouvement de véhicule (375) et de l'état de mouvement de véhicule (s), le procédé comprenant en outre

la fourniture (S4) d'une mesure de performance radar (555) du module radar (110) à la fonction de coordination de MSD (530) indiquant une précision de la vitesse au sol déterminée, et

la réduction (S5) d'un point de consigne de patinage de roue d'une ou de plusieurs roues (310) du véhicule utilitaire lourd (100), par la fonction de coordination de MSD (530), si la mesure de performance radar ne satisfait pas à un critère d'acceptation prédéterminé.

13. Programme informatique (1020) comprenant des moyens de code de programme pour exécuter les étapes selon la revendication 12 lorsque le programme est exécuté sur un ordinateur.

14. Module radar (110) destiné à déterminer la vitesse au sol d'un véhicule utilitaire lourd (100), le module comprenant

un émetteur-récepteur radar configuré pour transmettre et recevoir un signal radar (115),

une unité de commande agencée pour déterminer la vitesse au sol sur la base du signal radar reçu, **caractérisé en ce que**

l'unité de commande est également agencée pour déterminer une mesure de performance radar (555) indiquant une précision de la vitesse au sol déterminée,

le module comprend un port de sortie pour transmettre la mesure de performance radar (555) à une fonction de coordination de dispositif d'assistance au mouvement (MSD) (530) du véhicule utilitaire lourd (100).

15. Unité de commande agencée pour exécuter une fonction de coordination de dispositif d'assistance au mouvement (MSD) (530),

dans laquelle l'unité de commande est configurée pour commander l'actionnement d'une pluralité de MSD du véhicule utilitaire lourd en fonction d'une demande de mouvement de véhicule (375) et en fonction de l'état de mouvement de véhicule (s),

**caractérisée en ce que** ladite unité de commande comprend un port d'entrée agencé pour recevoir une mesure de performance radar (555) et

dans laquelle l'unité de commande est agencée pour réduire un point de consigne de patinage de roue d'une ou de plusieurs roues (310) du véhicule utilitaire lourd (100) si la mesure de performance radar ne satisfait pas à un critère d'acceptation prédéterminé.

16. Unité de commande agencée pour exécuter une fonction d'estimation de mouvement (510) pour un véhicule utilitaire lourd (100),

l'unité de commande comprenant un premier port d'entrée agencé pour recevoir une vitesse au sol $(v_x, v_y)$ du véhicule utilitaire lourd (100), ainsi qu'une vitesse de roue $(\omega_x)$ associée à une roue (310) du véhicule utilitaire lourd (100), **caractérisée en ce que** ladite unité de commande comprend un second port d'entrée agencé pour recevoir des données (535) indiquant un point de consigne de patinage de roue et/ou un point de consigne de couple de la roue (310),

dans laquelle l'unité de commande étant agencée pour déterminer l'état de mouvement de véhicule sur la base d'une combinaison pondérée de la vitesse au sol $(v_x, v_y)$ et de la vitesse de la roue $(\omega_x)$, où les poids de la combinaison pondérée sont déterminés sur la base des données (535) indiquant le point de consigne de patinage de roue et/ou le point de consigne de couple de la roue (310).

FIG. 1

FIG. 2

FIG. 3

FIG. 4A

FIG. 4B

FIG. 4C

500

TSM
370

$\delta / c_{req}$     $a_{req}$

375

VMM
360

$V_1$     $V_2$

$Fy_1$  $Fx_1$     $Fy_2$  $Fx_2$

$Mz_1$     $Mz_2$

310     $\omega_x$

110

SENSORS 550

(RADAR) (WHEEL) (GPS) (IMU)

$F_y$

$F_x$     $F_z$

SENSOR DATA

RADAR PERFORMANCE - 555

510

(optional)

530

| MOTION ESTIMATION | s | FORCE GENERATION | V | MSD COORDINATION |
|---|---|---|---|---|

520

MSD set-points:

$T_i / \lambda_i / \omega_i / \delta_i$

$\lambda_{lim} / \omega_{lim} / \delta_{lim}$

WHEEL SLIP DATA – 535

status     status     $\delta_{lim} / \alpha_{lim}$

$T_i / \lambda_i / \omega_i$     $T_i / \lambda_i / \omega_i$     $\delta_i$, etc

MSD
330

365

| BRAKES | PROPULSION | STEERING |
|---|---|---|

FIG. 5

600

vx3l
vy3r

vx2l
vy2l

vx1l
vy1l

110

110

110

360

110

100

110

vx3r
vy3r

vx2r
vy2r

vx1r
vy1r

vω

FIG. 6

700

Var

power[W]

710

730

720

Doppler [Hz]

FIG. 7

S1

S2

S3

S4

S5

FIG. 8

900

910

920

930

FIG. 9

1000

1010

1020

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017215751 A
- WO 2021144010 A
- US 20040138802 A
- US 20200191938 A1
- WO 2021144065 A1
- US 6194850 B1

### Non-patent literature cited in the description

- **THOMAS GILLESPIE**. Fundamentals of Vehicle Dynamics. Society of Automotive Engineers, 1992
- **HANS PACEJKA**. Tyre and vehicle dynamics. Elsevier Ltd., 2012
- **SANDEEP RAO**. Introduction to mmwave Sensing: FMCW Radars. *Texas Instruments*, 2017